# EUROPEAN PATENT SPECIFICATION

(11) **EP 3 103 628 B1**
(45) Date of publication and mention of the grant of the patent: **12.08.2020**
(21) Application number: 16173021.3
(22) Date of filing: 04.06.2016
(51) Int. Cl.: B29C 70/46, B29C 70/86, B05B 12/00, B05B 7/02, B05B 7/24

(54) **SPRAY GUN**
SPRÜHPISTOLE
PISTOLET DE PULVÉRISATION

(30) Priority: 11.06.2015 IT UB20150943
(43) Date of publication of application: 14.12.2016
(73) Proprietor: Walmec S.P.A., 31025 S. Lucia di Piave (Treviso) (IT)
(72) Inventor: ZANETTI, Paolo, 31025 Santa Lucia di Piave (TV) (IT)
(74) Representative: Citron, Massimiliano

(56) References cited:
- EP-A2- 2 474 712
- WO-A1-01/03853
- WO-A1-2014/076673
- US-A- 4 997 131
- US-A1- 2014 048 627

## Description

The present invention relates to a spray gun for spraying.

Spray guns, see e.g. the type described in EP2803421, usually have a graspable body provided with a nozzle capable of spraying a coating product (e.g. paint) and air. The nozzle is formed in a cap screwable on the body, which also comprises various threaded fittings to which the tubes carrying the sprayable product and the air are to be connected. The tubes (or relevant fittings thereof) are mounted on threaded bushings of the spray gun, which communicate with internal ducts inside the body that lead up to the nozzle. Often the graspable body has the shape of a gun with a trigger to control the jet, for greater comfort of use.

The problem of comfort for a spray gun is very important but still partially unsolved. A body shop repairman, for example, holds it all day, therefore good ergonomics and low weight are essential factors to allow the user a high and prolonged quality in the spraying work. A weary hand - as everyone knows - loses precision and makes mistakes. On the other hand, the pressures and efforts at play, as well as the threaded fittings for connecting the tubes, dictate for the structure of the spray gun minimum safety thicknesses, which clash with the desire to decrease its weight. If too small a thickness is used for the threaded bushings, they will sooner or later give way and the spray gun must be disposed.

US 4 997 131 discloses a sprayer for garden water having a grip portion covered by elastomeric material.

US 2014 048627 disclosed a spray gun with an exchangeable spray medium guide unit.

The main object of the invention is to provide an improved spray gun which solves at least one of the above problems.

Another object is to provide a lighter and/or more resistant spray gun. At least one object is achieved with a spray gun as defined in the independent Claim.

The invention relates to a spray gun for spraying a product, comprising:
a metallic body connectable to a grip or handle,
a nozzle that can be fed through a duct internal to the body and is able to spray the product,
a jacket made of rigid material superimposed on the metallic material of the body, wherein (the layer of) the jacket boosts the mechanical resistance of the body, which remains light nevertheless.

The jacket has several advantages, including:
- it allows to reduce the volume of the metallic component of the body, thereby reducing its weight;
- it strengthens the openings of the body, especially the threads or the threaded bushing, by surrounding the perimeter thereof.

The jacket may be done in various ways, e.g. through over-injection or pouring of material, or by mechanical shape-coupling (e.g. through snap-coupling or adhesives).

The jacket may be made out of sundry materials, preferably a thermoplastic material, optionally added with a dispersion of mineral fillers, that is over-molded to the metallic body.

The thermoplastic material may comprise or be constituted by e.g. resin, PPS or polyamide.

The mineral filler may comprise or preferably be constituted by fibers, in particular carbon fibers or glass fibers.

The jacket uniformly covers the entire body surrounding the openings of its internal ducts.

In particular, in the spray gun the body may comprise a threaded bushing, which is connectable to a tube for feeding the nozzle through the inner duct, and the jacket may be placed in correspondence of and/or around the bushing. This improves the resistance of the threads, the part mostly under mechanical stress. The jacket may be placed all around the perimeter of the bushing, for maximum strength.

Preferably, the jacket comprises a layer of carbon which in turn comprises a layer of pre-impregnated carbon fibers, and/or the jacket has a thickness of 0.5 mm to 2 mm, preferably 1 mm. This ensures resistance as well as minimum final weight.

The spray gun may comprise a cap or ring which is fixable at the outlet of the internal duct and is provided with a hole constituting the nozzle, and/or the body is e.g. an aluminum block. Preferably the cap or ring is made from carbon fibers.

The present invention will hereinafter be further described in preferred embodiments, with reference to the accompanying drawings wherein:
- Fig. 1 shows a three dimensional view of a spray gun;
- Fig. 2 shows a side view of a body comprised in the spray gun of Fig. 1;
- Fig. 3 shows a sectional view of the body of Fig. 2.

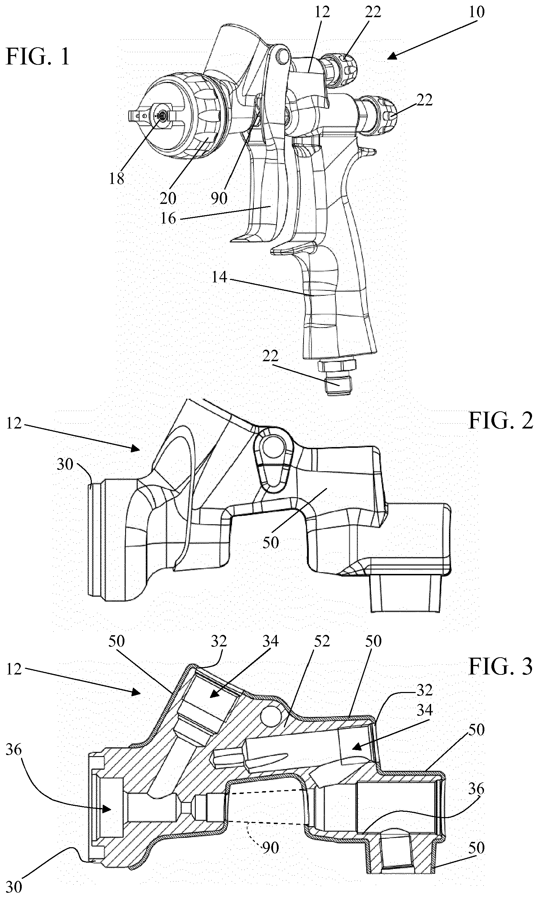

A spray gun 10 (Fig. 1) comprises a central body 12 coupled at one end to a handle or grip 14 and at the other to a ring or cylindrical cap 20 provided with a hole or nozzle 18. The cap or ring 20 can be screwed on a front thread 30 (fig. 2) of the body 12, to which is also hinged a lever or trigger 16, with the function of controlling the spraying jet outgoing from the nozzle 18.

The body 12 (fig. 3) comprises circular openings 34, provided with a perimetral thread 32, to which are screwable some fittings 22 adapted for connecting with tubes (not shown) that lead compressed air and/or the product to be sprayed to the spray gun. Fig. 3 shows internal ducts 36, of known type, of the body 12 which serve to convey towards an opening 36 for the nozzle 18 the material incoming from the fittings 22. The flow of material or product is controllable by a valve 50 controlled by the trigger 16.

In particular, from fig. 3, the layered structure of the body 12 can be appreciated. It comprises a metal inner block 52, e.g. made of aluminum (which is easily workable), coated with a layer or jacket 50 made out carbon fibers or thermoplastic material; in particular the layer 50 is present around the threads 32 or the metal crowns that form them. The carbon e.g. is about 10 times harder than aluminum, thus the strength of the threads 32 is highly enhanced. Note indeed that the threads 32 are usually formed in the portions of the block 52 which have quite limited thickness, therefore without the layer or jacket 50 the structural strength is not satisfactory.

The layer or jacket 50 being lightweight, the weight of the spray gun is not affected; rather, the strength being equal, the block 52 can be produced with less metal, and thus the overall weight can be considerably reduced. The layer or jacket 50 may have e.g. a thickness of 0.5 mm to 2 mm, preferably 1 mm.

Preferably, the layer or jacket 50 comprises or is constituted solely by one or more (known) sheets of PRE-PREG, or pre-impregnated carbon fibers. Said PRE-PREG is e.g. a fabric composed of carbon fibers, glass fibers or Kevlar fibers, generally pre-impregnated with a resin, e.g. an epoxy-based resin.

Note that another advantage of the jacket 50 is to foster the cleaning and good maintenance of the spray gun 10. The residues of sprayed paint or product falling on the metallic body of the prior art tend to tenaciously adhere thereto as on the surface of the sprayed object (think of a car body); however if they end up on the jacket 50 they are easier to remove.

The trigger or lever 16 may be advantageously an element produced from a (e.g. folded) sheet of carbon. It thus results very light and durable. The cap or ring 20 may advantageously be an element made out of carbon fibers, to be very light and durable.

not affected; rather, the strength being equal, the block 52 can be produced with less metal, and thus the overall weight can be considerably reduced. The layer or jacket 50 may have e.g. a thickness of 0.5 mm to 2 mm, preferably 1 mm.

A method for producing the assembly piece of Fig. 2 and 3 may have the following steps:
- taking a metal block forged with the dimensional features of the block 52;
- optionally the forged block is milled to remove excess metal portions, to lighten or shape some parts thereof;
- optionally the block is milled to derive the threads 32;
- in a mold, a sheet or layer of carbon fiber is arranged, preferably two sheets or layers, one on each side of the forged block;
- the forged block is arranged inside the mold and between the two said sheets or layers, or in contact with a said sheet or layer;
- the mold is closed and heated to harden the layer or sheet;
- the assembly thus obtained is removed from the mold, preferably processing it thereafter to remove burrs or excesses of a sheet or layer.

The final surface of the layer or jacket 50 is smooth and shiny, so that it also favors the handling and cleaning.

Preferably, the layer or jacket 50 comprises or is constituted solely by one or more (known) sheets of PRE-PREG, or pre-impregnated carbon fibers. Said PRE-PREG is e.g. a fabric composed of carbon fibers, glass fibers or Kevlar fibers, generally pre-impregnated with a resin, e.g. an epoxy-based resin.

Another method to produce the assembly piece of Fig. 2 and 3 may have the following steps:
- taking a metal block forged with the dimensional features of the block 52;
- arranging the forged block into a mold, and thermoplastic material is injected into the mold to produce the layer or jacket 50;
- the assembly thus obtained is removed from the mold;
- the assembly of the body and the jacket is processed to remove burrs or excess material, wherein during the processing, which preferably takes place with numerical control machines, in particular:
- the forged block is milled to remove excess portions of metal, to lighten or shape some parts thereof; and/or
- the block is milled to obtain the threads 32; and/or
- the block is milled to obtain the thread 30; and/or the circular openings 34 are refined; and/or
- the inner conduits 36 of the body 12 are refined.

The peculiarity of processing or finishing the assembly formed by the body and jacket allows not only increasing the processing precision of the assembly, but also correcting possible defects of the jacket.

Note that another advantage of the jacket 50 is to foster the cleaning and good maintenance of the spray gun 10. The residues of sprayed paint or product falling on the metallic body of the prior art tend to tenaciously adhere thereto as on the surface of the sprayed object (think of a car body); however if they end up on the jacket 50 they are easier to remove.

The trigger or lever 16 may be advantageously an element produced from a (e.g. folded) sheet of carbon. It thus results very light and durable. The cap or ring 20 may advantageously be an element made out of carbon fibers, to be very light and durable.

## Claims

1. Spray gun (10) for spraying a product, comprising:
a grip or handle (14),
a metallic body (12) connected to the grip or handle (14),
a nozzle (18) that can be fed through a duct (36) internal to the body and is able to spray the product,
**characterized by** comprising a jacket (50) made of rigid material superimposed on the metallic material of the body,
the jacket (50) uniformly covering the entire body surrounding the openings of its internal ducts.

2. Spray gun according to claim 1, **characterized in that** the body comprises a threaded bushing (34), which is connectable to a tube for feeding the nozzle through the internal duct (36), and the jacket is placed in correspondence of and/or around the bushing (34).

3. Spray gun according to claim 2, wherein the jacket is placed all around the perimeter of the bushing (34).

4. Spray gun according to claim 1 or 2 or 3, comprising a cap or ring (20) which is fixable at the outlet of the internal duct and is provided with a hole (18) constituting the nozzle (12).

5. Spray gun according to any one of the preceding claims, wherein the jacket is made out of a thermoplastic material.

6. Spray gun according to claim 5, wherein the jacket (50) comprises or is constituted by a resin, PPS or polyamide or a carbon layer.

7. Spray gun according to claim 5, wherein the jacket (50) comprises a dispersion of mineral fillers.

8. Spray gun according to claim 7, wherein the mineral fillers are glass or carbon fibers.

9. Spray gun according to any one of the preceding claims, wherein the jacket comprises a layer of pre-preg carbon fibers.

10. Spray gun according to any one of the preceding claims, wherein the body (12) is an aluminum block.

11. Spray gun according to any one of the preceding claims, wherein the jacket (50) has a thickness of 0.5 mm to 2 mm, preferably 1 mm.

12. Spray gun according to any one of the preceding claims 4 to 11, wherein the cap or ring (20) is made from carbon fibers.

## Patentansprüche

1. Spritzpistole (10) zum Sprühen eines Produkts, umfassend
einen Handgriff oder Griff (14),
einen metallischen Körper (12), der mit dem Handgriff oder Griff verbunden werden kann,
eine Düse (18), die durch eine Leitung (36) innerhalb des Körpers versorgt werden kann und das Produkt sprühen kann,
**dadurch gekennzeichnet, dass** diese einen Mantel (50) aus starrem Material umfasst, der dem metallischen Material des Körpers überlagert ist,
wobei der Mantel (50) gleichmäßig den gesamten Körper bedeckt und die Öffnungen seiner inneren Kanäle umgibt.

2. Spritzpistole nach Anspruch 1, **dadurch gekennzeichnet, dass** der Körper (12) eine Gewindebuchse (34) umfasst, die mit einem Rohr zum Versorgen der Düse durch die Innenleitung (36) verbunden werden kann, und der Mantel an und/oder um die Buchse (34) angeordnet ist.

3. Spritzpistole nach Anspruch 2, wobei der Mantel um den Umfang der Buchse (34) herum angeordnet ist.

4. Spritzpistole nach Anspruch 1 oder 2 oder 3, umfassend einen Deckel oder Ring (20), der am Auslass der Innenleitung befestigt werden kann und mit einem Loch (18) ausgestattet ist, der die Düse (12) bildet.

5. Spritzpistole nach einem der vorhergehenden Ansprüche, wobei der Mantel aus thermoplastischem Material besteht.

6. Spritzpistole nach Anspruch 5, wobei der Mantel (50) ein Harz, PPS oder Polyamid oder eine Kohlenstoffschicht umfasst oder daraus besteht.

7. Spritzpistole nach Anspruch 5, wobei der Mantel eine Dispersion mineralischer Füllstoffe umfasst.

8. Spritzpistole nach Anspruch 7, wobei die mineralischen Füllstoffe Kohlenstofffasern oder Glasfasern sind.

9. Spritzpistole nach einem der vorhergehenden Ansprüche, wobei der Mantel eine Schicht aus vorimprägnierten Kohlenstofffasern umfasst.

10. Spritzpistole nach einem der vorhergehenden Ansprüche, wobei der Körper (12) ein Aluminiumblock ist.

11. Spritzpistole nach einem der vorhergehenden Ansprüche, wobei der Mantel (50) eine Dicke 0,5 mm bis 2 mm, vorzugsweise 1 mm, aufweist.

12. Spritzpistole nach einem der vorhergehenden Ansprüche 4 bis 11, wobei der Deckel oder Ring (20) aus Kohlenstofffasern besteht.

## Revendications

1. Aérographe (10) pour pulvériser un produit, comprenant
un manche ou poignée (14),
un corps (12) métallique pouvant être connecté au manche ou poignée,
une buse (18) qui peut être alimentée à travers un conduit (36) à l'intérieur du corps et qui est capable de pulvériser le produit,
**caractérisé en ce qu'**il comprend une chemise (50) en matière rigide superposée à la matière métallique du corps,
la chemise (50) couvrant uniformément tout le corps entourant les ouvertures de ses conduits intérieurs.

2. Aérographe selon la revendication 1, **caractérisé en ce que** le corps (12) comprend une douille filetée (34), connectable à un tuyau pour alimenter la buse à travers le conduit intérieur (36), et la chemise est placée en correspondance et/ou autour de la douille (34).

3. Aérographe selon la revendication 2, où la chemise est placée tout autour du périmètre de la douille (34).

4. Aérographe selon la revendication 1 ou 2 ou 3, comprenant un couvercle ou anneau (20) qui peut être fixé à la sortie du conduit intérieur et qui est équipé d'un trou (18) constituant la buse (12).

5. Aérographe selon l'une quelconque des revendications précédentes, où la chemise est en matière thermoplastique.

6. Aérographe selon la revendication 5, où la chemise (50) comprend ou est constituée d'une résine, PPS ou polyamide ou d'une couche de carbone.

7. Aérographe selon la revendication 5, où la chemise comprend une dispersion de charges minérales.

8. Aérographe selon la revendication 7, où les charges minérales sont des fibres de carbone ou des fibres de verre.

9. Aérographe selon l'une quelconque des revendications précédentes, où la chemise comprend une couche de fibres de carbone pré-imprégnées.

10. Aérographe selon l'une quelconque des revendications précédentes, où le corps (12) est un bloc en aluminium.

11. Aérographe selon l'une quelconque des revendications précédentes, où la chemise (50) a une épaisseur de 0,5 mm à 2 mm, de préférence 1 mm.

12. Aérographe selon l'une quelconque des revendications précédentes 4 à 11, où le couvercle ou l'anneau (20) est en fibres de carbone.
